(19)

Europäisches
Patentamt
European
Patent Office
Office européen
des brevets

(11) **EP 3 835 938 A1**

(12) **EUROPEAN PATENT APPLICATION**

(43) Date of publication:
**16.06.2021  Bulletin 2021/24**

(51) Int Cl.:
***G06F 5/01*** *(2006.01)*      ***G06F 7/544*** *(2006.01)*

(21) Application number: **19215342.7**

(22) Date of filing: **11.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Unify Patente GmbH & Co. KG**
**81739 München (DE)**

(72) Inventors:
• **BERNARDI, Paulo**
 **80610-100 Curitiba (BR)**
• **SAMSONIUK, Marcelo**
 **80310-610 Curitiba (BR)**

(74) Representative: **Pösentrup, Judith et al**
 **Schaafhausen Patentanwälte PartGmbB**
 **Prinzregentenplatz 15**
 **81675 München (DE)**

(54) **COMPUTER-IMPLEMENTED METHOD OF EXECUTING AN ARITHMETIC OR LOGIC OPERATION IN COMBINATION WITH AN ACCUMULATE OPERATION AND PROCESSOR**

(57)    The present invention relates to a computer-implemented method of executing an arithmetic or logic operation (4) in combination with an accumulate operation in an arithmetic logic unit, ALU, (1) wherein the method comprises the steps of receiving a first element (2) and a second element (2') at the ALU (1) and combining the first and second elements (2, 2') in the ALU (1) according to the arithmetic or logic operation (4), performing an accumulate operation on the result of the combined first and second elements in an accumulator unit (3) via an add logic (8) of the ALU (1) and a feedback path (5) leading from the accumulator unit (3) to the add logic (8), performing a first shift operation on the accumulated result, wherein the method further comprises the step of performing a second shift operation in the feedback path (5), wherein the second shift operation is defined by an operator (4') that determines the direction of the shift and the number of bits to be shifted in a barrel shifter, wherein all steps are executed in one single clock. Further, the present invention relates to a processor, comprising an ALU (1), the ALU (1) being adapted to execute an arithmetic operation or logic operation (4) in combination with an accumulate operation in one single clock, wherein the ALU (1) is adapted to carry out the method of executing an arithmetic or logic operation (4) in combination with an accumulate operation.

Fig. 3

**Description**

The present invention relates to a computer-implemented method of executing an arithmetic or logic operation in combination with an accumulate operation and a processor for carrying out the computer-implemented method.

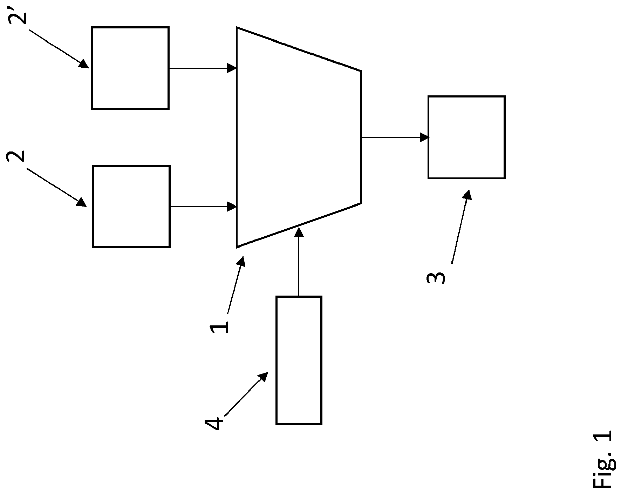

In prior art, on general processor architecture, an arithmetic logic unit (ALU) performs arithmetic operations on integer binary numbers. Classically, the ALU is organized in a way that elements input, for example, two elements exemplary indicated here as B and C are combined by the ALU according to a defined logic or arithmetic operation named "op" and the output result of that operation is stored in another element A, also known as "accumulator" (see Fig. 1).

Further, the supported operations include the basic arithmetic operations, such as addition, subtraction, multiplication, division, etc., as well logic operations, as AND, OR, XOR, NOT, etc.:

$$A <= B \; op \; C$$

Examples of common ALU operations are listed below:

$$A <= B \times C \; //MUL \; instruction$$

$$A <= B + C \; //SUM \; instruction$$

$$A <= B - C \; //SUB \; instruction$$

$$A <= B \; \& \; C \; //AND \; instruction$$

$$A <= B \; ^\wedge \; C \; //XOR \; instruction$$

$$A <= [(B + C) * D] \; //SUMMUL \; instruction$$

However, due to the performance requirements for signal processing, ALUs known in prior art are capable to perform arithmetical and accumulate instructions, as for example, the most common is the multiply-accumulate (MAC) instruction.

The MAC can be decomposed into a multiplication (MUL) of the elements B and C, but instead of storing the result directly in the element A, the result is added to the existing value in the element A. This operation is known as "accumulate" or just ACC:

$$A <= A + (B \times C)$$

Usually, MAC operations are performed using a loop, or with sequential instructions, as described below:

$$A_2 <= A_1 + (B_1 \times C_1) \; // \; MAC \; instruction$$

$$A_3 <= A_2 + (B_2 \times C_2) \; // \; MAC \; instruction$$

$$\dots$$

$$A_n <= A_{n-1} + (B_{n-1} \times C_{n-1}) \; // \; MAC \; instruction$$

The MAC instruction is typically done in a single clock cycle, allowing for high data rates. However, the continuous accumulation may cause the accumulator A to overflow after some time and the overflow needs to be processed, thus, impairing the performance of the MAC instruction. To avoid this problem, in prior art it is known to shift the accumulator, in a way that the successive sums never produce an overflow.

Thus, when an arithmetic operation is needed followed by a shift operation, usually two instructions are performed separately:

$$A <= A + (B \times C) \text{ //MAC instruction}$$

$$A <= A >> r \text{ //Shift instruction}$$

wherein r is an arbitrary variable or constant, typically 1 in order to avoid overflows, but it is not limited to 1. When a rotate is needed sequentially followed by a MAC operation, this may be expressed, as follows:

$$A_2 <= A_1 + (B_1 \times C_1)$$

$$A_{2r} <= A_2 >> r$$

$$A_3 <= A_{2r} + (B_2 \times C_2)$$

$$A_{3r} <= A_3 >> r$$

$$...$$

$$A_n <= A_{n-1} + (B_{n-1} \times C_{n-1})$$

$$A_{nr} <= A_n >> r$$

However, although the MAC instruction is executed in one single clock cycle, the extra shift after the MAC instruction reduces the performance by a factor of two. In case the shift can be executed in a single clock cycle too, the data rate performance will be reduced by 2, meaning that, in order to avoid overflows, the data rate performance is always impacted.

Therefore, the present invention is based on the object to provide a computer-implemented method of executing an arithmetic or logic operation in combination with an accumulate operation and a corresponding processor for carrying out the method with an improved data rate performance.

This object is solved according to the present invention by a computer-implemented method of executing an arithmetic or logic operation in combination with an accumulate operation having the features according to claim 1, and a processor having the features according to claim 10. Preferred embodiments of the invention are specified in the respective dependent claims.

According to the present invention, a computer-implemented method of executing an arithmetic or logic operation in combination with an accumulate operation in an arithmetic logic unit, ALU, wherein the method comprises the steps of receiving a first element and a second element at the ALU and combining the first and second elements in the ALU according to the arithmetic or logic operation, performing an accumulate operation on the result of the combined first and second elements in an accumulator unit via an add logic of the ALU and a feedback path from the accumulator unit to the add logic, performing a first shift operation on the accumulated result, performing a second shift operation in the feedback path, wherein the second shift operation is defined by an operator that determines the direction of the shift and the number of bits to be shifted in a barrel shifter, wherein all steps are executed in one single clock cycle.

Thus, the data rate performance is improved, while overflow is prevented. All instructions or operations may be carried out in one single clock instruction, i.e. a instruction that requires a single clock cycle to execute. According to the inventive method, a barrel shifter and, for example, a MAC instruction may be executed in combination.

In particular, the the present invention enables to increase performance in signal applications, reducing by 2 times the number of clock cycles required to process a digital filter. Another advantage is that the integration of the shift operation in the MAC operation also reduces by 2 times the number of instructions as long the two operations are fused in a single instruction word.

According to a preferred embodiment of the invention, the arithmetic operation comprises addition, subtraction, multiplication, or division.

According to another preferred the logic operation comprises AND, OR, XOR or NOT.

Preferably, the arithmetic operation is a multiply operation combined with the accumulate operation, so as to realize a multiply-accumulate instruction, MAC.

Also, it is advantageous, if the accumulate operation performs a pre-shift operation.

According to another preferred embodiment of the invention, the pre-shift operation is carried out at the same time as the multiply operation by a barrel shifter, which is a well known logic element and consists in a combinational logic that shifts an operand without require clock cycles, i.e. the operand is pre-shifted by some combinations and a multiplex select the desired result according to the number of bits to be shifted.

According to still another preferred embodiment of the invention, the result of the multiply operation and the result of the shift operation are added and stored in the accumulator unit in a single instruction and in a single clock cycle.

The pre-shift operation may comprise arbitrary r-bits barrel shifters for either shifting to the left side or to the right sight.

Preferably, subsequent to the pre-shift operation, an ALU operation, in particular, a MAC, is executed in the same clock cycle.

Moreover, according to the present invention, a processor is provided comprising an ALU, the ALU being adapted to execute an arithmetic operation or logic operation in combination with an accumulate operation in one single clock cycle, wherein the ALU is adapted to carry out the method as outlined above.

The invention and embodiments thereof will be described below in further detail in connection with the drawing.

Fig. 1    schematically illustrates, how an arithmetic operation is done on a general processor architecture according to prior art;

Fig. 2    schematically illustrates how arithmetical and accumulate instructions are carried out on a general processor architecture according to prior art;

Fig. 3    schematically illustrates how an accumulation operation is carried out according to an embodiment of the invention;

Fig. 4    schematically illustrates a barrel-shifter operation according to an embodiment of the invention;

Fig. 5    schematically illustrates the internal paths of a typical MAC ALU and the path used to include the shift operation in the feed back path.

Fig. 6    schematically illustrates a pre-shift operation according to an embodiment of the invention;

Fig. 7    schematically illustrates an implementation of a pre-sum logic according to an embodiment of the invention;

Fig. 8    schematically illustrates an AND operation according to an embodiment of the invention; and

Fig. 9    illustrates a timing diagram showing the temporal input and results when a the proposed instructions are used sequentially.

Fig. 1 schematically illustrates schematically illustrates, how an arithmetic operation on integer binary numbers is done on a general processor architecture according to prior art. Here, the ALU 1, as already mentioned above, is organized in such a way that the input elements B, indicated by reference numeral 2, and C indicated by the reference numeral 2' are combined by the ALU according to a defined logic or arithmetic operation named "op", indicated by reference numeral 4, and the output result of that operation is stored in the element A, also known as "accumulator" 3. From the performance point of view, the entire logic can be combinational, except by the final element "accumulator" 3, which requires a single clock cycle to store the computed result.

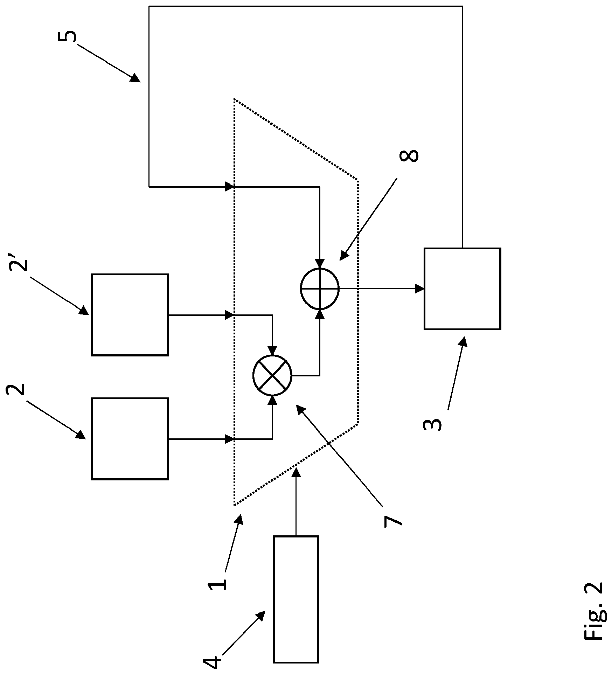

Fig. 2 schematically illustrates how arithmetical and accumulate instructions are carried out on a general processor architecture according to prior art. Namely, the MAC may be decomposed as a multiplication (MUL) of the elements B, indicated by reference numeral 2, and C indicated by reference numeral 2'. However, instead of storing the result directly in the element A, indicated by reference numeral 3, wherein the result is added to the existing value in the element A. This operation is known as "accumulate", as reflected by the expression below:

$$A <= A + (B \times C)$$

As shown in Fig. 2, reference numeral 7 indicates the multiply logic, and reference numeral 8 indicates the add logic, whereby the result of the multiplication of elements 2 (A) and 2' (B) is accumulated in the element or accumulator unit 3 via the add logic 8 and a feedback path 5.

As also already outlined above, MAC operations are performed using a loop, or with sequential instructions, as described below:

$$A_2 <= A_1 + (B_1 \times C_1) \text{ // MAC instruction}$$

$$A_3 <= A_2 + (B_2 \times C_2) \text{ // MAC instruction}$$

$$\ldots$$

$$A_n <= A_{n-1} + (B^{n-1} \times C_{n-1}) \text{ // MAC instruction}$$

The MAC instruction is typically done in a single clock cycle, allowing for high data rates. However, the continuous accumulation may cause the accumulator A to overflow after some time and the overflow needs to be processed, thus, impairing the performance of the MAC instruction. To avoid this problem, in prior art it is known to shift the accumulator, in a way that the successive sums never produce an overflow. Thus, when an arithmetic operation is needed followed by a shift operation, usually two instructions are performed separately:

$$A <= A + (B \times C) \text{ //MAC instruction}$$

$$A <= A >> r \text{ //Shift instruction}$$

wherein r is an arbitrary variable or constant, typically 1 in order to avoid overflows, but it is not limited to 1. When a rotate is needed sequentially followed by a MAC operation, this may be expressed, as follows:

$$A_2 <= A_1 + (B_1 \times C_1)$$

$$A_{2r} <= A_2 >> r$$

$$A_3 <= A_{2r} + (B_2 \times C_2)$$

$$A_{3r} <= A_3 >> r$$

$$\ldots$$

$$A_n <= A_{n-1} + (B_{n-1} \times C_{n-1})$$

$$A_{nr} <= A_n >> r$$

However, although the MAC instruction is executed in one single clock cycle, the extra shift after the MAC instruction reduces the performance by a factor of two. In case the shift can be executed in a single clock cycle too, the data rate performance will be reduced by 2, meaning that, in order to avoid overflows, the data rate performance is always impacted.

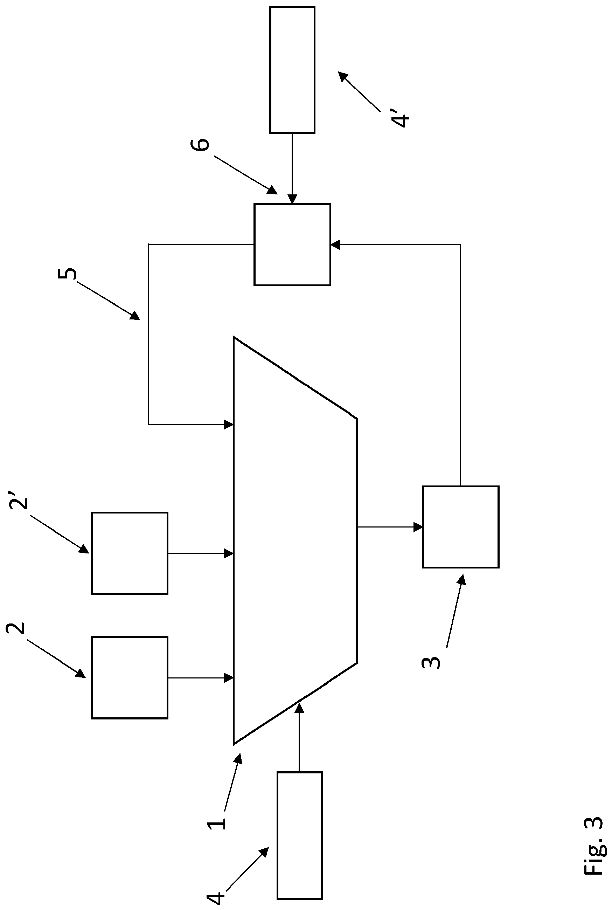

Fig. 3 schematically illustrates how an accumulation operation is carried out according to an embodiment of the invention, so as to solve the above described performance problem of the prior art. Again, the ALU 1 is organized in such a way that the input elements B, indicated by reference numeral 2, and C indicated by the reference numeral 2' are combined by the ALU according to a defined logic or arithmetic operation named "op", indicated by reference numeral 4, and the output result of that operation is stored in the element A, also known as "accumulator" 3. However, in order to improve the performance, according to the embodiment illustrated here, a short path is integrated in the ALU 1 accumulate operation, in order to perform an additional barrel-shifter logic 6 in the accumulator feedback path 5.

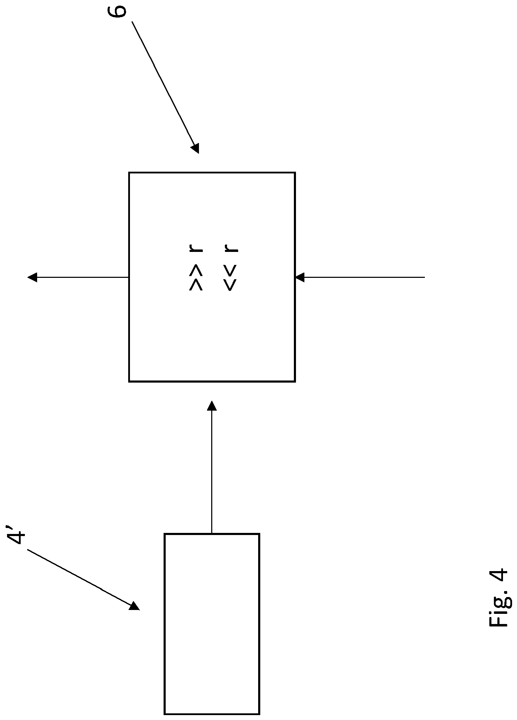

As can be seen in Fig. 4, this barrel-shifter operation is defined by an operator 4' that determines for which direction the shift will act (<< for left shift and >> for right shift) and the number of bits that shall be shifted (r), from $-m$ to $m$, wherein m corresponds to the accumulator width in bits and **r** is a value between $-m$ and $m$. Thus, the operators 4 and 4' define the shift + ALU complete instruction.

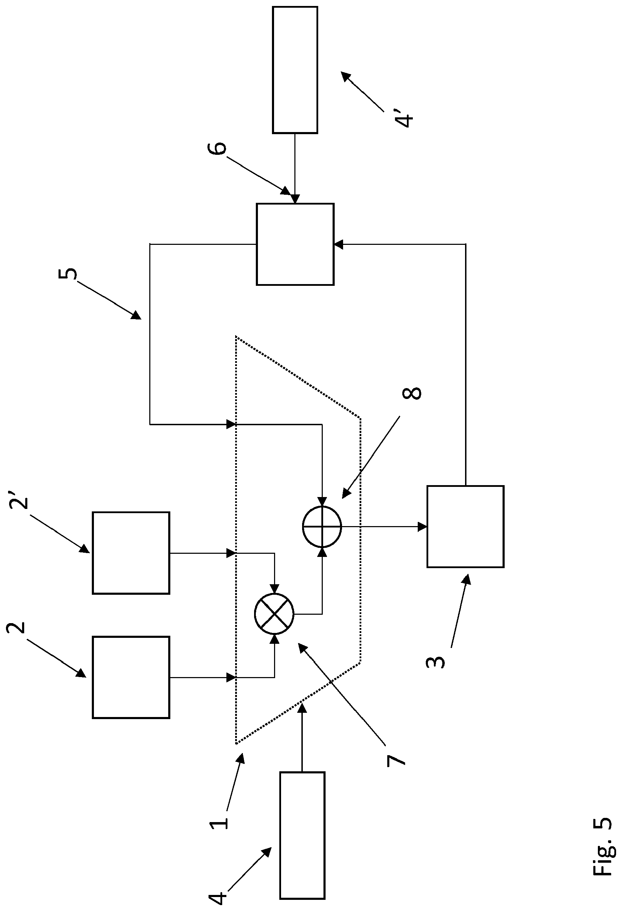

Fig. 5 schematically illustrates the internal paths of a typical MAC ALU and the path used to include the shift operation in the feed back path.

In case of a MAC operation, the accumulate operation performs a pre-shift operation at the same time as the multiplication, wherein the result of the B x C multiply operation and the result of the shift operation S(A) are added and then stored in the accumulator A, indicated by reference numeral 3, in a single instruction and in a single clock cycle, as expressed below:

$$A \le S(A) + (B \times C) \ //\text{Shift} + \text{MAC operation}$$

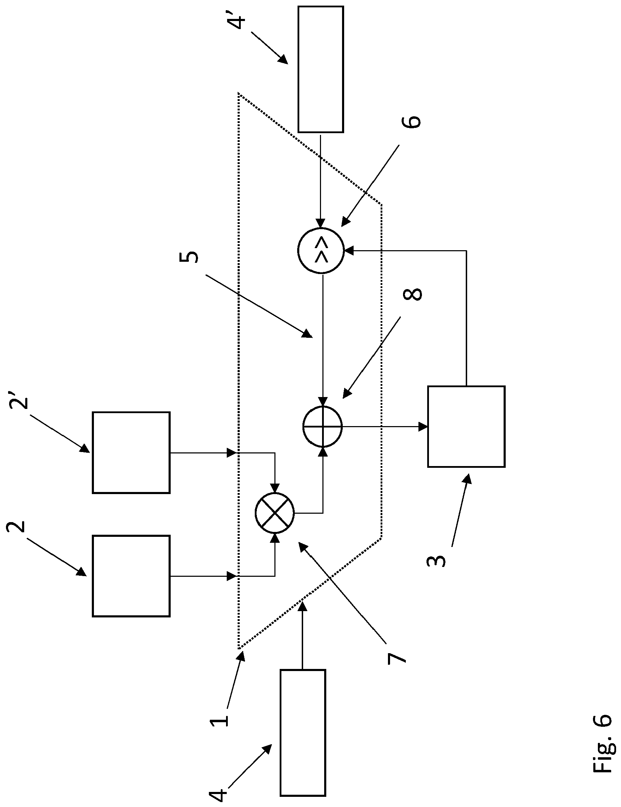

Fig. 6 schematically illustrates the use of a pre-shift operation according to an embodiment of the invention. As can be seen in the figure, a new subset of instructions is introduced here, where a pre-shift is executed, with consists of arbitrary r-bits barrel-shifter for left or right side followed by an ALU operation (usually a MAC) executed on the same clock cycle. Thereby, the algorithm mentioned above known from prior art may be optimized, as outlined below:

$$A_2 \le (A_1 >> r) + (B_1 \times C_1) \ //\text{MAC operation}$$

$$A_3 \le (A_2 >> r) + (B_2 \times C_2) \ //\text{Shift} + \text{MAC operation}$$

$$A_4 \le (A_3 >> r) + (B_3 \times C_3) \ //\text{Shift} + \text{MAC operation}$$

$$\dots$$

$$A_n \le (A_{n-1} >> r) + (B_{n-1} \times C_{n-1}) \ //\text{Shift} + \text{MAC operation}$$

Additionally, the shift + MAC operation may also optimize certain kind of operations, as $2^n$ division and multiplication on same clock cycle:

$$A \le (A / 2) + (B \times C) \ //\text{Shift} + \text{MAC, same as } (A >> 1) + (B \times C)$$

$$A \le (8 \times A) + (B \times C) \ //\text{Shift} + \text{MAC, same as } (A << 3) + (B \times C)$$

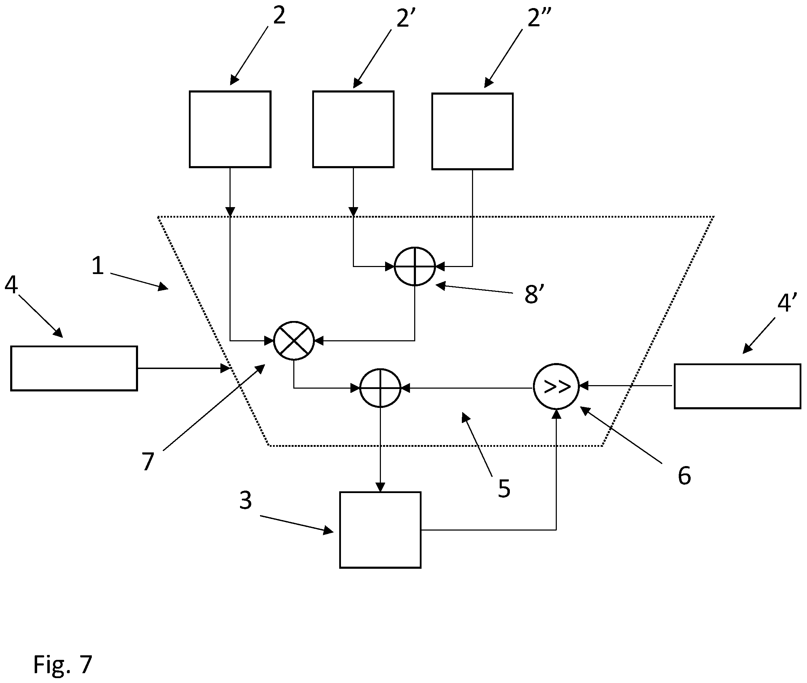

Fig. 7 schematically illustrates an implementation of a pre-sum logic according to an embodiment of the invention. It is noted that the instruction to be shifted is not restricted to a MAC operation, and any other common arithmetic operator is usable, as for example, sum, subtraction, a combination of them or a logic operation, depending of ALU characteristics. As illustrated here as an example, it is possible to implement the classical pre-sum typically found in the ALUs:

$$A <= (A >> r) + [(B + C) * D] \quad //$$

The above example uses an ALU 1 which implements a sum (add logic 8) and a multiply (multiply logic 7) on same clock cycle (Shift + SUMMAC).

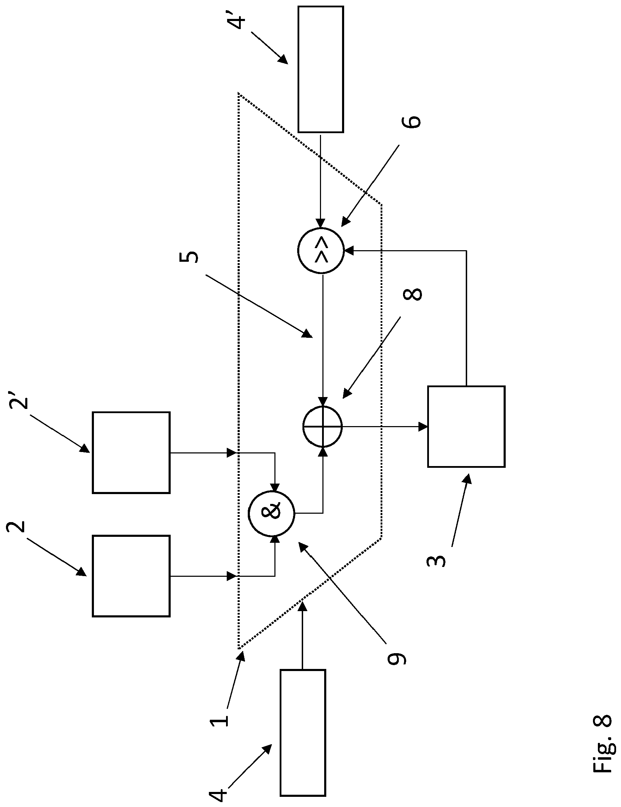

Fig. 8 schematically illustrates an AND operation according to an embodiment of the invention. It is noted that although the MAC operation is the most typical application, there are other applications regarding logic operations, such as the used in graphic processing, for example the AND operation illustrated in Fig. 7, wherein in this embodiment, an ALU 1 is used which implements a logic AND 9 (shift + AND), as expressed by:

$$A <= (A << r) + (B \& C)$$

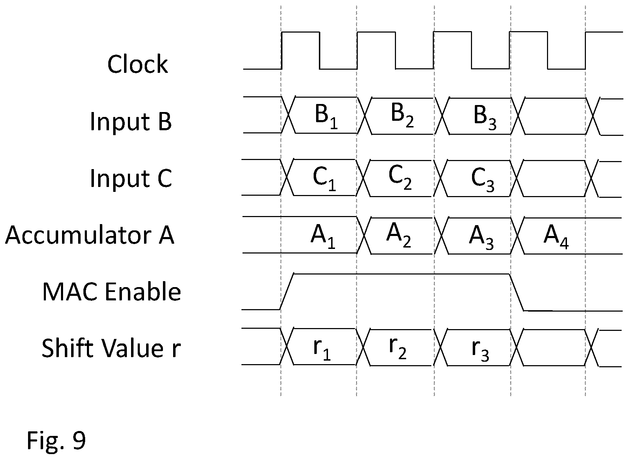

Fig. 9 shows a time diagrama in order to help illustrate the typical flow regarding single clock shift + MAC instruction. In this figure the input elements B, C and r are updated at the rate of one update per clock cycle. The accumulator A have some previously stored result and is updated only when the MAC operation is enabled (which occours with the value high).

Summarizing the above, according to the embodiments described, a new subset of instructions (shift + MAC) may be performed by using a barrel shifter coupled to a MAC which enables to improve performance and to maintain high data rates. Of course, the traditional MAC instruction is supported by setting the r number of bits to be shifted to zero.

Reference numerals

1       ALU
2, 2'    elements B and C
3       accumulator unit
4, 4'    arithmetic operation "op"
5       feedback path
6       barrel-shifter logic
7       multiply logic
8       add logic
9       AND logic

**Claims**

1. Computer-implemented method of executing an arithmetic or logic operation (4) in combination with an accumulate operation in an arithmetic logic unit, ALU, (1) wherein the method comprises the steps of

   - receiving a first element (2) and a second element (2') at the ALU (1) and combining the first and second elements (2, 2') in the ALU (1) according to the arithmetic or logic operation (4),
   - performing an accumulate operation on the result of the combined first and second elements in an accumulator unit (3) via an add logic (8) of the ALU (1) and a feedback path (5) leading from the accumulator unit (3) to the add logic (8),
   - performing a first shift operation on the accumulated result,

   **characterized in that** the method further comprises the step of

   - performing a second shift operation in the feedback path (5), wherein the second shift operation is defined by an operator (4') that determines the direction of the shift and the number of bits to be shifted in a barrel shifter,

   wherein all steps are executed in one single clock cycle.

2. Method according to claim 1, wherein the arithmetic operation comprises addition, subtraction, multiplication, or division.

3. Method according to claim 1, wherein the logic operation comprises AND, OR, XOR or NOT.

4. Method according to any one of the preceding claims, wherein arithmetic operation is a multiply operation combined with the accumulate operation, so as to realize a multiply-accumulate instruction, MAC.

5. Method according to claim 4, wherein the accumulate operation performs a pre-shift operation.

6. Method according to claim 5, wherein the pre-shift operation is carried out at the same time as the multiply operation.

7. Method according to any one of claims 5 or 6, wherein the result of the multiply operation and the result of the *pre-shift operation* are added and stored in the accumulator unit (3) in a single instruction and in a single clock cycle.

8. Method according to any one of claims 5 to 7, wherein the pre-shift operation comprises arbitrary r-bits barrel-shifter for either shifting to the left side or to the right sight.

9. Method according to claim 8, wherein subsequent to the pre-shift operation, an ALU operation, in particular, a MAC, is executed in the same clock cycle.

10. Processor, comprising an ALU (1), the ALU (1) being adapted to execute an arithmetic operation or logic operation (4) in combination with an accumulate operation in one single clock, wherein the ALU (1) is adapted to carry out the method according to any one of the preceding claims.

Fig. 1

EP 3 835 938 A1

Fig. 2

Fig. 3

Fig. 4

Fig. 5

Fig. 6

Fig. 7

Fig. 8

Clock

Input B $B_1$ $B_2$ $B_3$

Input C $C_1$ $C_2$ $C_3$

Accumulator A $A_1$ $A_2$ $A_3$ $A_4$

MAC Enable

Shift Value r $r_1$ $r_2$ $r_3$

Fig. 9

Europäisches
Patentamt

European
Patent Office

Office européen
des brevets

# EUROPEAN SEARCH REPORT

Application Number

EP 19 21 5342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 811 268 A (NISHITANI TAKAO [JP] ET AL) 7 March 1989 (1989-03-07) * column 7, line 59 - column 10, line 18; figure 1 * ----- | 1-10 | INV. G06F5/01 G06F7/544 |
| X | WO 86/02181 A1 (MOTOROLA INC [US]) 10 April 1986 (1986-04-10) * pages 5-11; figure 2 * ----- | 1-10 | |
| A | US 4 817 047 A (NISHITANI TAKAO [JP] ET AL) 28 March 1989 (1989-03-28) * column 7, line 59 - column 11, line 08; figure 1 * ----- | 1-10 | |

TECHNICAL FIELDS
SEARCHED     (IPC)

G06F

The present search report has been drawn up for all claims

| Place of search | Date of completion of the search | Examiner |
|---|---|---|
| Munich | 15 May 2020 | Prins, Leendert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 21 5342

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2020

| Patent document cited in search report | | Publication date | Patent family member(s) | | Publication date |
|---|---|---|---|---|---|
| US 4811268 | A | 07-03-1989 | CA<br>DE<br>EP<br>US | 1244955 A<br>3677051 D1<br>0202633 A1<br>4811268 A | 15-11-1988<br>28-02-1991<br>26-11-1986<br>07-03-1989 |
| WO 8602181 | A1 | 10-04-1986 | EP<br>KR<br>WO | 0197945 A1<br>860700300 A<br>8602181 A1 | 22-10-1986<br>01-08-1986<br>10-04-1986 |
| US 4817047 | A | 28-03-1989 | DE<br>EP<br>JP<br>US | 3689390 D1<br>0209049 A2<br>S6211933 A<br>4817047 A | 27-01-1994<br>21-01-1987<br>20-01-1987<br>28-03-1989 |

EPO FORM P0459

For more details about this annex : see Official Journal of the European Patent Office, No. 12/82